# FASCICULE DE BREVET EUROPEEN

(11) **EP 3 244 375 B1**
(45) Date de publication et mention de la délivrance du brevet: **17.02.2021**
(21) Numéro de dépôt: 17170202.0
(22) Date de dépôt: 09.05.2017
(51) Int. Cl.: G07F 7/08, G07F 19/00, G06F 21/71, G06F 21/50, G06F 21/57

(54) **MICROCONTRÔLEUR POUR DÉMARRAGE SÉCURISÉ AVEC PARE-FEU**
MIKROCONTROLLER ZUM GESICHERTEN STARTEN MIT FIREWALL
MICROCONTROLLER FOR SECURE STARTING WITH FIREWALL

(30) Priorité: 10.05.2016 BE 201605331; 12.07.2016 BE 201605582; 25.07.2016 BE 201605612
(43) Date de publication de la demande: 15.11.2017
(73) Titulaire: WORLDLINE, 1130 Bruxelles (BE)
(72) Inventeur: RICHEZ, Frédéric, 7170 MANAGE (BE); GULIKERS, Sven, 3020 HERENT (BE)
(74) Mandataire: Debay, Damien

(56) Documents cités:
- WO-A1-2016/069775
- US-A1- 2009 049 220
- US-A1- 2015 072 726
- US-A1- 2016 020 906

## Description

### DOMAINE TECHNIQUE DE L'INVENTION

La présente invention se rapporte au domaine de la protection des données et en particulier des données échangées dans les transactions financières. La présente invention concerne spécifiquement un dispositif pour assurer la sécurité des échanges de données confidentielles entre un client et une institution financière ou entre deux institutions financières.

### ARRIERE-PLAN TECHNOLOGIQUE DE L'INVENTION

La protection des données sensibles utilisées dans les transactions financières est un défi majeur pour le domaine de l'économie. Les transactions peuvent être faites soit par l'intermédiaire d'un site web dédié, le site web utilisant le cryptage et plusieures mesures de vérification soit au moyen d'un dispositif tel que des distributeurs automatiques. Ces derniers autorisent les transactions à l'aide de cartes avec au moins une puce électronique, la puce contenant au moins une information d'authentification du détenteur de la carte. Néanmoins, les dispositifs tels que les distributeurs automatiques présentent des inconvénients. En effet, un distributeur automatique comprend une mémoire qui stocke les codes d'authentification récupérés à partir d'un réseau interbancaire, par exemple. Une défaillance volontaire ou involontaire de la machine, cependant, peut permettre à un pirate de récupérer les données de la mémoire contenue dans la machine. Bien que certains progrès dans la protection des distributeurs automatiques aient été réalisés ces dernières années, les machines ont encore des inconvénients associés à leur architecture et/ou des composants électroniques qu'ils contiennent.

Dans le document US7953989 B1, il est enseigné un dispositif comprenant un microcontrôleur haute sécurité qui comprend des circuits de commande d'autoprotection pour détecter des conditions de vulnérabilité: une écriture dans la mémoire du programme avant que les informations financières sensibles aient été effacées, une condition détection de sabotage, l'activation d'un débogueur, une condition de mise sous tension, une condition de températures non conformes, une condition de tension d'alimentation non conformes, une condition de défaillance d'un oscillateur, et une condition de retrait de la batterie. Si le circuit de commande d'autoprotection détecte une condition de vulnérabilité, alors la mémoire où les informations financières sensibles pourraient être stockées, est effacée. Lors de la mise sous tension si une image valide est détectée dans la mémoire du programme, alors le chargeur d'amorçage n'est pas exécuté et la mémoire sécurisée n'est pas effacée mais plutôt l'image est exécutée, le circuit de commande d'autoprotection étant un automate qui est hors du contrôle du logiciel chargé par un utilisateur et hors du contrôle du débogueur. Le document US2009049220 décrit un circuit électronique de gestion d'interruptions avec un dispositif de sécurité SSM ("secure state machine" en anglais) et avec des parefeux matériels pour sécuriser les données et les communications.

L'un des inconvénients du dispositif décrit ci-dessus est que la sécurité du système dépend entièrement du bon fonctionnement du dispositif d'autoprotection. En effet, si ce dernier était défectueux, la sécurité de l'ensemble du système serait compromise.

### DESCRIPTION GENERALE DE L'INVENTION

La présente invention a pour but de pallier un ou plusieurs inconvénients de l'art antérieur en proposant qui peut protéger de manière efficace les échanges de données dans les transactions financières et empêcher le vol de données par dégradation de la machine contenant ledit dispositif.

Ce but est atteint par un microcontrôleur comprenant un processeur comportant une mémoire séparée en différentes zones qui sont sécurisée, non sécurisée ou partagée, pour mettre en œuvre un démarrage sécurisé, un circuit de commande d'autoprotection comportant au moins un capteur pour détecter les conditions de vulnérabilité, ledit processeur exécutant un système d'exploitation Linux (Linus OS) et comprenant également un moniteur pour commuter les opérations soit dans une zone sécurisée de la mémoire pour faire fonctionner au moins des processus d'authentification soit dans une zone non sécurisée pour d'autres opérations et déterminer si les périphériques connectés ou accédant au, ou accédés par le microcontrôleur doivent être gérés par la zone sécurisée ou par la zone non sécurisée, ledit microcontrôleur étant caractérisé en ce qu'il comprend un pare-feu matériel, utilisé par ledit processeur, pour déterminer si l'information ou la commande d'une application est autorisé à accéder à la zone sécurisée ou non, ledit pare-feu matériel étant relié audit circuit de commande d'autoprotection pour éviter toute intrusion et/ou récupération de données en cas de défaillance dudit circuit de commande d'autoprotection.

Selon une autre particularité, les zones sécurisée et non sécurisée sont toutes deux incluses dans le processeur du microcontrôleur, les procédés de traitement et d'échange de données exécutés par le microcontrôleur s'effectuant d'une zone à l'autre en fonction de la nature des informations à traiter.

Selon une autre particularité, le pare-feu matériel comporte des registres qui sont affectés chacun à un périphérique et qui utilisent les informations mémorisées dans l'arborescence des périphériques Linux, décrit dans le système d'exploitation Linux, dans lequel ladite arborescence des périphériques est ajoutée avec des attributs de sécurité, définissant le statut sécurisé (S) ou non sécurisé (N) de périphérique à mémoriser dans chaque registre associé à un périphérique un statut sécurisé ou non sécurisé pour induire le traitement de l'information ou de la commande à partir d'un périphérique dans la zone sécurisée du processeur si le périphérique est défini comme sécurisé, et induire le traitement de l'information ou de la commande à partir d'un périphérique dans la zone non sécurisée du processeur si le périphérique est défini comme non sécurisé.

Selon une autre particularité, l'arborescence des périphériques Linux est authentifiée par une application primaire sécurisée durant l'opération de démarrage sécurisé.

Selon une autre particularité, la zone sécurisée comprend un cœur recevant au moins une instruction de la zone non sécurisée ou d'un périphérique inclus dans l'arborescence des périphériques, et exécutant différentes opérations qui dépendent de l'instruction reçue, un registre comprenant un ensemble de services sécurisés comportant les règles pour la protection de différents types des processus correspondant à différents types de services.

Selon une autre particularité, la zone non sécurisée comprend le noyau du système d'exploitation, un environnement d'exécution des programmes et applications et/ou des procédés de traitement des données, au moins une bibliothèque, et au moins une plateforme dédiée à l'ajout d'applications clientes ou d'applications propriétaires, le procédé d'ajout et l'accès desdites applications aux fonctionnalités du dispositif contrôlé par le microcontrôleur étant définis par des règles de sécurité mises en œuvre par le pare-feu matériel.

Selon une autre particularité, l'environnement d'exécution est configuré pour intégrer au moins un moyen pour interpréter différents types d'applications clientes, ledit moyen étant capable de traduire le langage desdites applications en programmes natifs afin de les traiter sur ledit environnement d'exécution.

Selon une autre particularité, l'environnement d'exécution est Android.

Selon une autre particularité, les périphériques inclus dans l'arborescence des périphériques et accessibles sont au moins deux des périphériques suivants: circuit Bluetooth/Wifi, Ethernet, imprimantes, affichage, GPS, caméra, son, capteur de proximité, HDMI, USB, écran tactile, clavier, lecteur sans contact (NFC), lecteur de cartes magnétiques, lecteur de cartes à puce, matériel cryptographique, gestionnaire de clés informatiques.

On entend par lecteur sans contact tous lecteurs d'objet ne nécessitant pas de contact direct entre l'objet et le lecteur afin de communiquer au moins une information, par exemple une carte utilisant la technologie de radio-identification (RFID) ou communications en champ proche (NFC).

On entend par «matériel cryptographique» tout dispositif ou périphérique permettant de crypter ou chiffrer des informations ou données sensibles, par exemple et de manière non limitative un cryptoprocesseur.

Selon une autre particularité, les périphériques: affichage, écran tactile, clavier, lecteur sans contact, lecteur de cartes magnétiques, lecteur de carte à puce, matériel cryptographique et gestionnaire de clés informatiques sont des périphériques sécurisés, tandis que les périphériques: circuit Bluetooth/Wifi, Ethernet, imprimantes, GPS, caméra, son, capteur de proximité, HDMI et USB reçoivent soit un statut sécurisé (S) soit un statut non sécurisé (N).

Selon une autre particularité, le processus de démarrage sécurisé du système d'exploitation Linux pour un microcontrôleur avec dispositif d'autoprotection et zone sécurisée comprend les étapes de:
- commencer à exécuter le code contenu dans la mémoire ROM;
- charger une partition initiale cryptée à partir d'une mémoire externe;
- décrypter l'information de la partition initiale;
- authentifier des clés publiques (Pk) et authentifier une application primaire protégée (PPA) et un logiciel initial (ISW);
- et charger et démarrer les autres programmes de démarrage de Linux.
le processus de démarrage étant caractérisé en ce que l'étape « charger et démarrer les autres programmes de démarrage de Linux» comprend au moins une des étapes consistant à :
- charger le U-boot SPL (Secondary Program Loader);
- authentifier l'arborescence des périphériques (DT);
- démarrer le PA-loader (Primary Application loader);
- décrypter le PA live (Primary Application live);
- initialiser ramdisk;
- charger le noyau Linux;
- démarrer le noyau Linux;
- démarrer dm-verity;
- exécuter des applications Android sous SELinux

Selon une autre particularité, au moins plusieurs registres de périphériques du microcontrôleur ont initialement un statut sécurisé (S) quand le code contenu dans la ROM commence à s'exécuter et avant l'activation du PA-loader.

Selon une autre particularité, après l'activation du PA-loader, les attributs de sécurité définis pour chaque périphérique dans l'arborescence de périphériques sont gérés par le PA-Loader et le statut sécurisé (S) d'au moins un registre du pare-feu associé à un périphérique, initialement défini dans un statut sécurisé (S) et jugé non critique en raison de la description dans l'arborescence des périphériques pour la sécurité et/ou l'intégrité d'un système ou d'un dispositif, est modifié en un statut non sécurisé (N) ou normal dans le registre du pare-feu.

Selon une autre particularité, les plateformes d'applications sont séparées de la bibliothèque, du noyau du système d'exploitation et de l'environnement d'exécution du système d'exploitation par un module de contrôle, contenu dans le système d'exploitation, qui contrôle les accès pour les applications et limite l'accès à un périphérique donné ou à un service pour les applications clientes non autorisées, le contrôle à l'accès dudit périphérique ou dudit service étant effectué au moyen d'un fichier fourni par SELinux, ledit fichier décrivant dans une liste blanche ou « whitelist » le type d'opérations permises en combinaison avec l'identité (ID) d'une application particulière ou d'un processus et établissant la permission d'opération pour chaque application.

Selon une autre particularité, l'accès d'une application cliente autorisée ou non autorisée à certaines fonctionnalités d'un périphérique tel que par exemple l'écran d'affichage tactile, est contrôlé par le microcontrôleur et se fait au moyen d'un proxy sécurisé actionné par le module de contrôle, ledit proxy sécurisé vérifiant si un message concernant un évènement tactile est signé par un tiers de confiance avant d'être affiché et sinon, l'événement tactile n'est pas transféré dans la zone non sécurisée.

Selon une autre particularité, un microcontrôleur avec un dispositif d'autoprotection et zone sécurisée et un démarrage sécurisé du système d'exploitation Linux est utilisé dans un terminal tout-en-un comprenant un écran LCD, un écran tactile capacitif, un lecteur de carte magnétique, un lecteur de cartes à puce, un lecteur de cartes sans contact, un circuit imprimé de sécurité en amont, un circuit imprimé de connexion et une caméra pour constituer un terminal inviolable dans lequel chaque opération sécurisée ou périphérique sécurisé est géré(e) par la zone sécurisée du microcontrôleur et dans lequel la protection de l'accès à une cette zone sécurisée est protégé contre l'accès d'une sonde au microcontrôleur par l'insertion du circuit imprimé principal comportant le microcontrôleur dans une cage de connexion permettant de détecter toute tentative d'ouverture de la cage ou de perçage à travers la cage.

Selon une autre particularité, le circuit imprimé de sécurité en amont comprend au moins un capteur de proximité pour détecter toute présence action et envoyer un signal au microcontrôleur pour effectuer une analyse et déclencher une action (affichage d'un message de bienvenue ou d'utilisation).

Selon une autre particularité, le circuit imprimé de connexion comprend au moins une interface USB, un port série UART, une interface Ethernet et une interface Bluetooth/Wifi pour la communication et l'échange de données.

### DESCRIPTION DES FIGURES ILLUSTRATIVES

D'autres particularités et avantages de la présente invention apparaîtront plus clairement à la lecture de la description ci-après, faite en référence aux dessins annexes, dans lesquels:
- La Figure 1 représente un diagramme de la structure du microcontrôleur selon un mode de réalisation,
- La Figure 2 représente un diagramme des composants du microcontrôleur sécurisés par le pare-feu dudit microcontrôleur, selon un mode de réalisation,
- La Figure 3 représente un diagramme de la structure du processeur du microcontrôleur, selon un mode de réalisation,

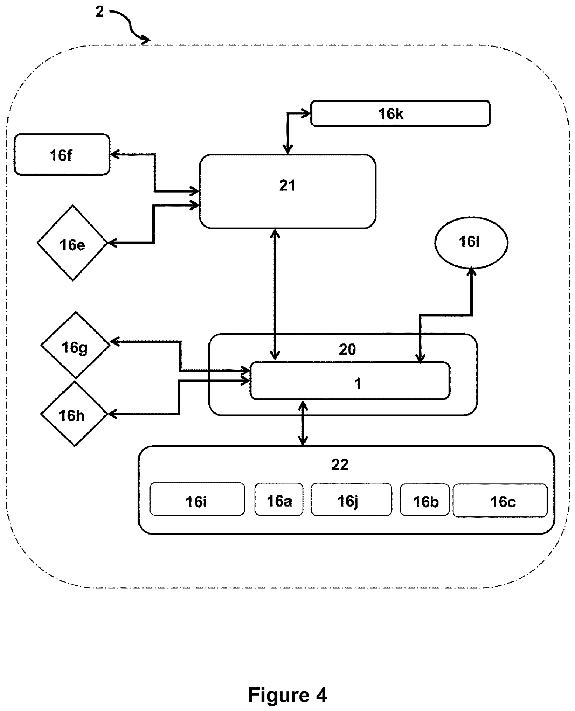

- La Figure 4 représente un diagramme de la structure d'un terminal comprenant le microcontrôleur, selon un mode de réalisation,
- Les Figures 5A, 5B et 5C représentent les diagrammes, respectivement, du processus de démarrage du système et les étapes S1, S2a, S2b, S3a et S3b dudit processus de démarrage, selon un mode de réalisation.

### DESCRIPTION DES MODES DE REALISATION PREFERES DE L'INVENTION

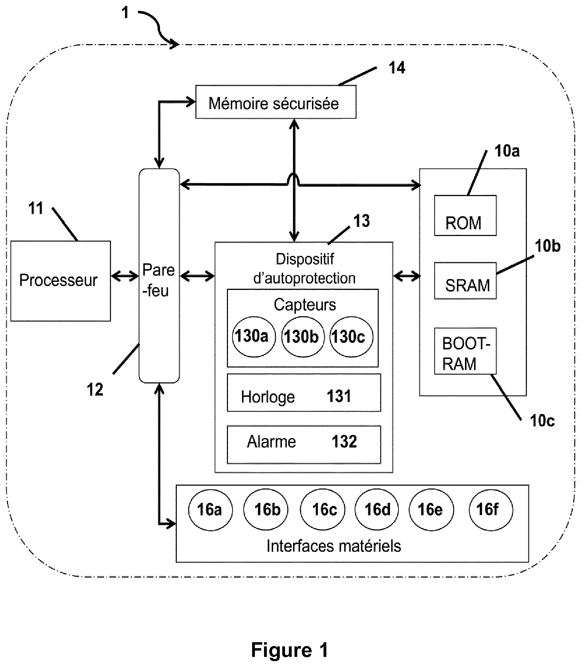

La présente invention concerne un microcontrôleur (1, Figure 1) pour la protection d'échange de données dans un terminal pour des applications avec un haut niveau de sécurité telles que par exemple les transactions financières.

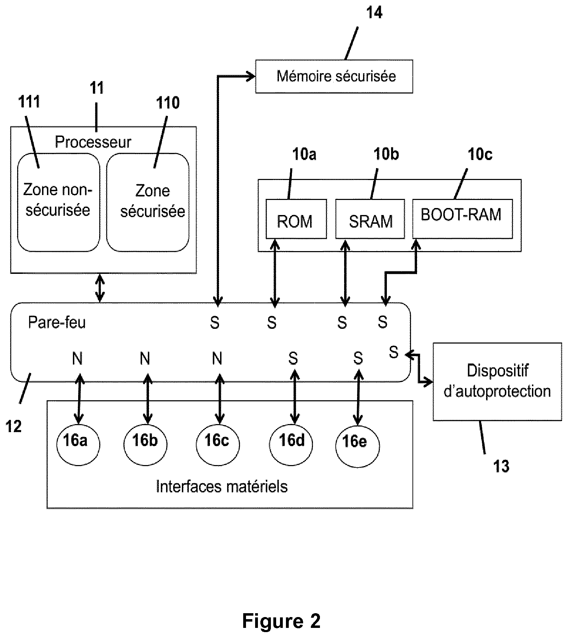

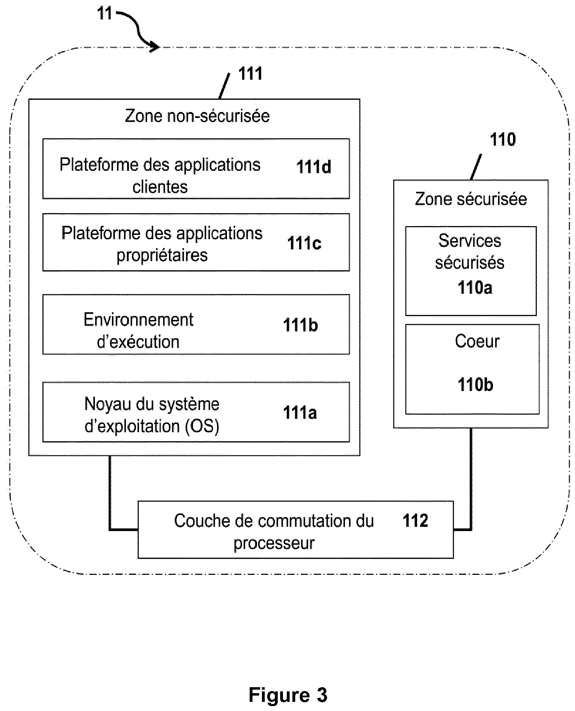

Dans certains modes de réalisation, le microcontrôleur (1) comprend un processeur (11, Figures, 2 et 3) comprenant une mémoire séparée en au moins deux zones qui sont sécurisée (110, Figures 2 et 3), non sécurisée (111, Figures 2 et 3), pour mettre en œuvre un démarrage sécurisé, comprenant un circuit de commande d'autoprotection (13) ou circuit d'autoprotection pour détecter les conditions de vulnérabilité et le processeur (11) exécutant un système d'exploitation Linux, ledit processeur comprenant un moniteur pour commuter les opérations soit dans une zone sécurisée (110) de la mémoire pour faire fonctionner au moins des processus d'authentification soit dans une zone non sécurisée (111) pour d'autres opérations et déterminer si les périphériques connectés ou accédant au, ou accédés par le microcontrôleur (1) doivent être gérés par la zone sécurisée (110) ou par la zone non sécurisée (111) en utilisant un pare-feu matériel (12, Figures 1 et 2) pour déterminer si l'information ou la commande d'une application est autorisé à accéder à la zone sécurisée (110) ou non. Le dispositif d'autoprotection (13) comprend par exemple des capteurs (130a, 130b, 130c, Figure 1) lui permettant de détecter si quelqu'un essaye d'avoir accès au microcontrôleur (1) ou au dispositif contrôlé par le microcontrôleur (1) dans le cas ou l'accès n'est pas autorisé. Par exemple et de manière non-limitative, les capteurs (130a, 130b, 130c) sont de nature à détecter des chocs (130a) et/ou des variations de tension (130b) et de température (130c), etc. Le dispositif d'autoprotection (13) comprend en outre au moins une alarme (132) se déclenchant en cas d'intrusion et au moins une horloge (131) afin de dater les événements, par exemple une tentative d'accès non-autorisée. En cas d'intrusion le dispositif d'autoprotection (13) envoie un ordre permettant d'effacer les données confidentielles contenues dans des mémoires sécurisées (14) ou cryptées (volatiles ou non volatiles) disposées dans le microcontrôleur (1) et reliées au dispositif d'autoprotection (13). Les données sont, par exemple et de manière non limitative, des codes authentification ou des clés de codage. Le microcontrôleur comprend également une mémoire ROM (10a) (« Read-Only Memory » ou mémoire morte), une mémoire de démarrage BOOT-RAM (10b), une mémoire statique SRAM (10c) (« Static Random Access Memory » ou mémoire vive statique) et un débogueur. Le processeur (11, Figures 1, 2 et 3) permet de virtualiser la zone sécurisée (110) et la zone non sécurisée (111) au moyen de la couche (112) de commutation de processeur. Par exemple et de manière non limitative, le processeur (11) est un ARM Cortex-A9. Les périphériques (16a,16b, 16c, 16d, 16e, 16f) gérés respectivement par la zone sécurisée (110) et la zone non sécurisée (111), du microcontrôleur (1), se voient assigner par le pare-feu matériel (12), respectivement, la lettre «S» (pour sécurisé) et la lettre «N» (pour non sécurisé ou normal), ladite information de sécurité est sauvegardée dans les registres du pare-feu matériel (12) comme représenté sur la figure 2. Le dispositif d'autoprotection (13), également relié au pare-feu matériel (12), se voit attribué un statut sécurisé permanent, afin d'éviter toute intrusion en particulier une tentative de récupération de données dans le cas où le dispositif d'autoprotection (13) serait défaillant.

Dans certains modes de réalisation, la mémoire est divisée en trois zones, une sécurisée, une non sécurisée et une partagée. La zone partagée est destinée à recevoir des périphériques nécessitant l'utilisation de ressources, par exemple des informations ou des applications, sécurisées et de ressources non sécurisées. Une telle architecture permet d'éviter l'introduction de point faible pour les périphériques nécessitant uniquement des ressources sécurisées.

Dans certains modes de réalisation, les zones sécurisées (110) et non sécurisées (ou zone normale) sont toutes deux incluses dans le processeur (11) du microcontrôleur (1), par exemple comme représenté sur les figures 2 et 3. Les procédés de traitement et d'échange de données exécutés par le microcontrôleur (1) s'effectuent d'une zone à l'autre en fonction de la nature des informations à traiter. Par exemple, si l'information porte sur des données sensibles telles que des codes d'authentification, elle est d'abord transmise à la zone sécurisée (110) pour vérification (authentification). Lorsque l'authentification est terminée, le résultat du traitement est transmis à la zone non sécurisée(111) pour permettre ou non la poursuite du traitement. La configuration du processeur (11) et de la mémoire dans une zone sécurisée (110) et une zone non sécurisée (111) et la présence du pare-feu matériel (12) contrôlant l'accessibilité des périphériques (16a,16b, 16c, 16d, 16e, 16f) gérés par le microcontrôleur (1) offre une couche de protection supplémentaire. Cette couche de protection pourrait être combinée, en plus, avec le circuit d'autoprotection (13) qui empêche principalement un accès non autorisé en provenance de l'extérieur. Le microcontrôleur (1) sécurisé empêche un accès non autorisé en provenance de l'intérieur et est donc complémentaire de la prévention d'un accès non autorisé en provenance de l'extérieur pour un terminal sécurisé et inviolable.

Dans certains modes de réalisation, le pare-feu matériel (12) comporte des registres qui sont affectés chacun à un périphérique (16a,16b, 16c, 16d, 16e, 16f) et qui utilisent les informations mémorisées dans l'arborescence des périphériques Linux, décrit dans le système d'exploitation Linux, dans lequel ladite arborescence des périphériques est ajoutée avec des attributs de sécurité définissant le statut sécurisé (S) ou non sécurisé (N) de périphérique à mémoriser dans chaque registre associé à un périphérique un statut sécurisé ou non sécurisé pour induire le traitement de l'information ou de la commande à partir d'un périphérique dans la zone sécurisée du processeur si le périphérique est défini comme sécurisé, et induire le traitement de l'information ou de la commande à partir d'un périphérique dans la zone non sécurisée du processeur si le périphérique est défini comme non sécurisé. La disposition des différentes interfaces associées aux différents périphériques dans les deux zones est configurée par le pare-feu matériel (12).Par exemple, si le processeur essaye d'accéder à une interface donnée, il doit le faire dans le bon mode d'opération c'est-à-dire selon le statut sécurisé ou non sécurisé établi par le pare-feu matériel (12) afin d'avoir accès à ladite interface.

Dans certains modes de réalisation, l'arborescence des périphériques Linux est authentifiée par une application primaire sécurisée durant l'opération de démarrage sécurisé.

Dans certains modes de réalisation, la zone sécurisée (110) comprend un cœur (110b) recevant au moins une instruction de la zone non sécurisée (111) ou d'un périphérique (16a, 16b, 16c, 16d, 16e, 16f) inclus dans l'arborescence des périphériques, et exécutant différentes opérations qui dépendent de l'instruction reçue, un registre (110a) comprenant un ensemble de services sécurisés comportant les règles pour la protection de différents types des processus correspondant à différents types de services

Dans certains modes de réalisation, la zone non sécurisée (111) comprend le noyau du système d'exploitation (111a), un environnement d'exécution (111b) des programmes et applications et/ou des procédés de traitement des données, au moins une bibliothèque, et au moins une plateforme (111c, 111d) dédiée à l'ajout d'applications clientes (111d) ou d'applications propriétaires (111c), le procédé d'ajout et l'accès desdites applications aux fonctionnalités du dispositif contrôlé par le microcontrôleur (1) étant définis par des règles de sécurité mises en œuvre par le pare-feu matériel (12).

Dans certains modes de réalisation, l'environnement d'exécution (111b) est configuré pour intégrer au moins un moyen pour interpréter différents types d'applications clientes, ledit moyen étant capable de traduire le langage desdites applications en programmes natifs afin de les traiter sur ledit environnement d'exécution (111b). Cette configuration permet ainsi d'éviter d'avoir à changer d'environnement d'exécution dès lors que l'on change le langage de programmation des applications clientes.

Dans certains modes de réalisation, l'environnement d'exécution est Android.

Dans certains modes de réalisation, les périphériques accessibles sont au moins deux des périphériques suivants: circuit Bluetooth (16c)/Wifi (16b), Ethernet (16j), imprimantes, affichage, GPS, caméra (16l), son, capteur de proximité (16k), HDMI, USB (16a), écran tactile (16f), clavier, lecteur sans contact (16e), un lecteur de cartes magnétiques (16h), lecteur de cartes à puce (16g), matériel cryptographique, gestionnaire de clés informatiques.

Dans certains modes de réalisation, les périphériques affichage, écran tactile (16f), clavier, lecteur sans contact (16e), un lecteur de cartes magnétique (16h), lecteur de carte à puce (16g), matériel cryptographique et gestionnaire de clés informatiques sont des périphériques sécurisés, tandis que les périphériques circuit Bluetooth (16c)/Wifi (16b), Ethernet (16j), imprimantes, GPS, caméra (16l), son, capteur de proximité (16k), HDMI et USB (16a) reçoivent soit un statut sécurisé (S) soit un statut non sécurisé (N).

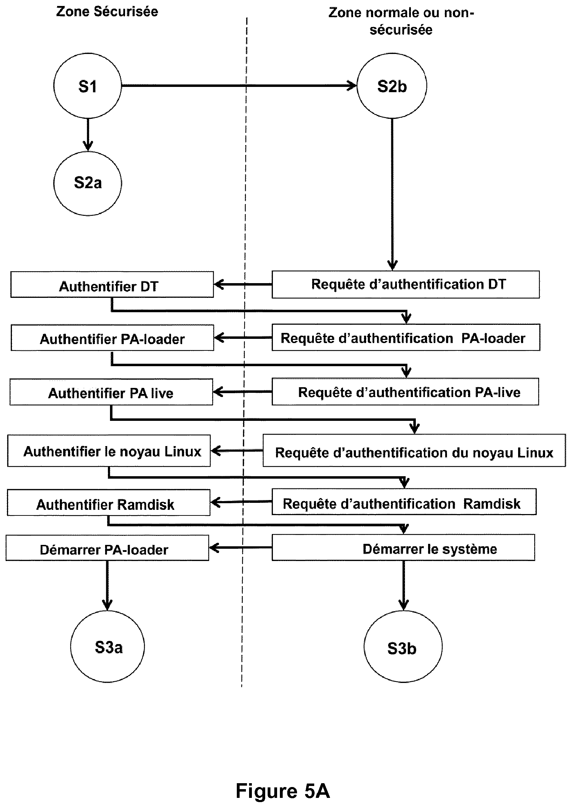

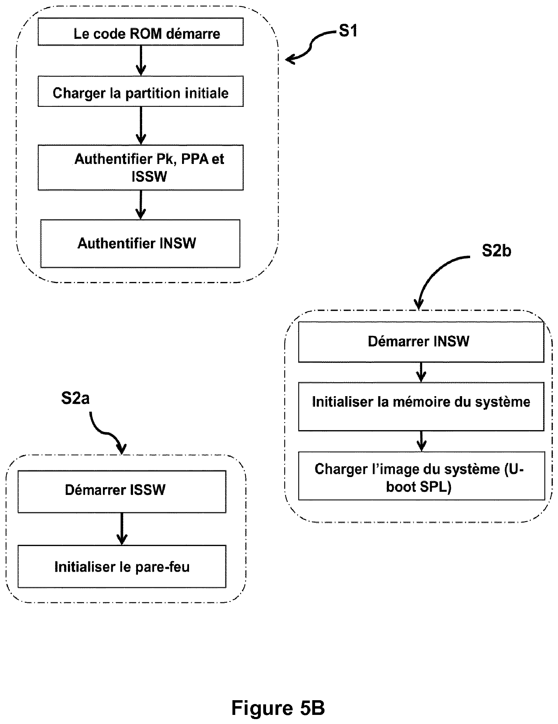

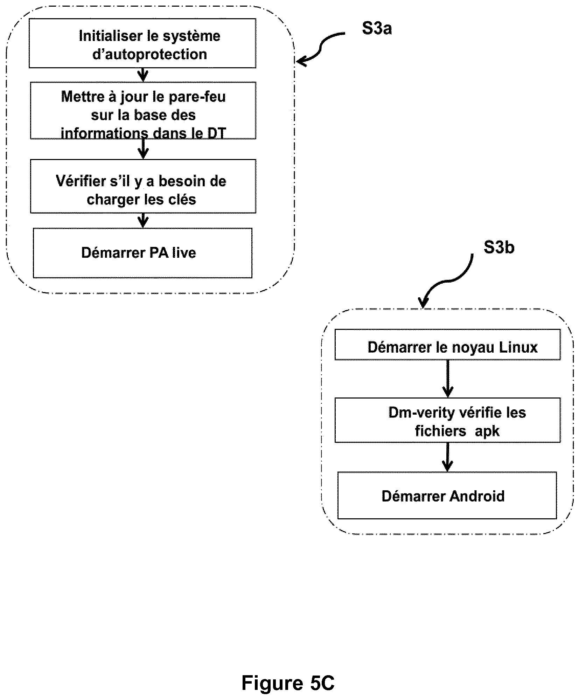

Dans certains modes de réalisation, le processus de démarrage sécurisé du système d'exploitation Linux (voir les Figures 5A, 5B et 5C) pour un microcontrôleur (1) avec dispositif d'autoprotection (13) et zone de sécurisée ou zone de traitement de confiance (110) comprend les étapes de:
- commencer à exécuter le code contenu dans la mémoire ROM (10a);
- charger une partition initiale cryptée à partir d'une mémoire externe;
- décrypter l'information de la partition initiale;
- authentifier les clés publiques (Pk) et authentifier l'application primaire protégée (PPA) et un logiciel initial (ISW);
- et charger et démarrer les autres programmes de démarrage de Linux.

Le ROM comprend les clés publiques pour l'authentification l'information de la partition initiale chargée à partir de la mémoire externe et/ou optionnellement le décryptage. Le ROM, ensuite, télécharge l'information décryptée de la partition initiale, l'application primaire protégée (PPA) et le logiciel initial (ISW), qui comprend un logiciel initial sécurisé (ISSW) et un logiciel initial normal ou non sécurisé (ISNW), dans la mémoire de démarrage ou BOOT-RAM (10b), uniquement accessible en mode sécurisé (S).

Dans un autre mode de réalisation, le processus de démarrage sécurisé du système d'exploitation Linux, en particulier et de préférence l'étape «charger et démarrer les autres programmes de démarrage de Linux» comprend au moins une des étapes consistant à:
- charger le U-boot SPL (Secondary Program Loader);
- authentifier l'arborescence des périphériques (DT);
- démarrer le PA-loader (Primary Application loader);
- décrypter le PA live (Primary Application live) qui est l'application spécifique sécurisée du client qui contient les fonctions spécifiques pour un client ou un schéma de paiement;
- initialiser ramdisk;
- charger le noyau Linux;
- démarrer le noyau Linux;
- démarrer dm-verity;
- exécuter des applications Android sous SELinux

L'image du U-boot SPL est chargée dans la zone non sécurisée ou zone normale (voir Figures 5A, 5B) du processeur (11). Après le démarrage des programmes, la liste des périphériques compris dans l'arborescence de périphériques du système d'exploitation est envoyée pour authentification dans la zone sécurisée (110). Après authentification de la liste, l'étape suivante est enclenchée. Si, au cours des différentes étapes, un processus d'authentification est requis, l'instruction est transférée, à nouveau, dans la zone sécurisée pour vérification. Le processus se déroule, ainsi, jusqu'au démarrage du système d'exploitation (110a) et à l'exécution des applications.

SELinux (Security-Enhanced Linux) est utilisé pour définir en outre les limites de l'environnement sécurisé ou « sandbox » de l'application Android. SELinux améliore la sécurité d'Android en confinant les processus privilégiés et en automatisant la création de la politique de sécurité. Tout ce qui n'est pas explicitement autorisé est refusé. SELinux peut fonctionner dans l'un des deux modes globaux: le mode permissif, dans lequel les refus d'autorisation sont consignés mais pas appliqués, et le mode renforcé, dans lequel les refus d'autorisation sont à la fois consignés et appliqués. SELinux est configuré dans le mode renforcé. SELinux supporte également un mode permissif par domaine dans lequel des domaines spécifiques (processus) peuvent être permissifs tout en plaçant le reste du système dans un mode renforcé global. Un domaine est tout simplement une étiquette identifiant un processus ou un ensemble de processus dans la politique de sécurité, où tous les processus marqués avec le même domaine sont traités de manière identique par la politique de sécurité. Une liste de domaines permissifs est stockée dans la mémoire du microcontrôleur (1) et vérifiée avant d'exécuter une commande fournie par une application Android.

Par conséquent les plateformes d'applications sont séparées de la bibliothèque, le noyau et l'environnement d'exécution du système d'exploitation par un module de contrôle, contenue dans le système d'exploitation, qui contrôle l'accès des applications et limite l'accès à un périphérique donné ou un service à une application cliente non autorisée, le contrôle et l'accès audit périphérique ou audit service s'effectuant au moyen d'un fichier fourni par SELinux, ledit fichier décrivant dans une « whitelist » le type des opérations qui sont autorisées par une application particulière ou un processus particulier et établissant la permission d'opération pour chaque application.

Dans certains modes de réalisation, au moins plusieurs registres de périphériques du microcontrôleur (1) ont initialement un statut sécurisé (S) quand le code contenu dans la ROM (10a) commence à s'exécuter et avant l'activation du PA-loader. Le démarrage du système se fait toujours dans la zone sécurisée (111a), presque tous les périphériques se voient alors assigner, initialement par défaut, le statut sécurisé (S) et sont interdits d'accès jusqu'à ce que l'étape d'authentification des périphériques compris dans l'arborescence des périphériques soit exécutée.

Dans certains modes de réalisation, après l'activation du PA-loader, les attributs de sécurité définis pour chaque périphérique dans l'arborescence de périphériques sont gérés par le PA-Loader et le statut sécurisé (S) d'au moins un registre du pare-feu (12) associé à un périphérique, initialement défini dans un statut sécurisé (S) et jugé non critique en raison de la description dans l'arborescence des périphériques pour la sécurité et/ou l'intégrité d'un système ou d'un dispositif, est modifié en un statut non sécurisé (N) ou normal dans le registre du pare-feu. Après l'authentification de l'arborescence des périphériques, le PA-loader en effectue la lecture et change le statut des périphériques contenus dans l'arborescence suivant des règles établies par le pare-feu matériel (12). Par exemple, les registres du pare-feu associés à la caméra (16l) et à l'USB (16a) peuvent passer d'un statut sécurisé (S) à un statut non sécurisé (N), tandis que les registres du pare-feu associés à l'écran tactile (16f) ou le lecteur de carte magnétique (16h), qui manipulent des données sensibles, sont maintenus dans le statut sécurisé (S).

Dans certains modes de réalisation, les plateformes d'applications (111c, 111d) sont séparées de la bibliothèque, du noyau (111a) du système d'exploitation et de l'environnement d'exécution (111b) du système d'exploitation par un module de contrôle, contenu dans le système d'exploitation, qui contrôle les accès pour les applications et limite l'accès à un périphérique donné ou à un service pour les applications clientes non autorisées, le contrôle à l'accès dudit périphérique ou dudit service étant effectué au moyen d'un fichier fourni par SELinux, ledit fichier décrivant dans une liste blanche ou « whitelist » le type d'opérations permises en combinaison avec l'identité (ID) d'une application particulière ou d'un processus et établissant la permission d'opération pour chaque application.

Dans certains modes de réalisation, l'accès d'une application cliente autorisée ou non autorisée à certaines fonctionnalités d'un périphérique tel que par exemple l'écran d'affichage tactile, est contrôlé par le microcontrôleur (1) et se fait au moyen d'un proxy sécurisé actionné par le module de contrôle, ledit proxy sécurisé vérifiant si un message concernant un évènement tactile est signé par un tiers de confiance avant d'être affiché et sinon, l'événement tactile n'est pas transféré dans la zone non sécurisée. Par exemple et de manière non limitative, si une application cliente utilisant un API (interface de programmation d'application) standard d'Android, essaye d'avoir accès à l'écran d'affichage (16f) d'un dispositif contrôlé par le microcontrôleur (1), le module de contrôle actionne le proxy sécurisé qui vérifie s'il y a une correspondance entre l'API de l'application et l'API natif du système. S'il n'y a pas de correspondance, l'application n'est pas autorisée. Dans le cas où l'application est autorisée, l'écran n'affiche dans un premier temps que des données d'entrée fournies par l'application, lesdites données ne pouvant pas déclencher l'exécution d'une tâche. Les données sont, par la suite, transmises dans la zone sécurisée par le proxy sécurisé, pour vérification. Si les données sont authentifiées, celles-ci sont signées et retransmises, via le proxy sécurisé, à l'écran de manière à pouvoir déclencher dans le processeur de l'écran d'affichage, l'exécution d'une tâche.

Dans certains modes de réalisation, un microcontrôleur (1) avec un dispositif d'autoprotection (13) et zone sécurisée ou zone de traitement de confiance (110) et un démarrage sécurisé du système d'exploitation Linux est utilisé dans un terminal (2) tout-en-un comprenant un écran LCD (16f), un écran tactile capacitif (16f), un lecteur de carte magnétique (16h), un lecteur de carte à puce (16g), un lecteur de carte sans contact (16e), un circuit imprimé de sécurité en amont (21), un circuit imprimé de connexion (22) et une caméra (16l) pour constituer un terminal (2) inviolable dans lequel chaque opération sécurisée ou périphérique sécurisé est géré(e) par la zone sécurisée ou zone de traitement de confiance (110) du microcontrôleur (1) et dans lequel la protection de l'accès à une cette zone sécurisée ou zone de traitement de confiance (110) est protégé contre l'accès d'une sonde au microcontrôleur (1) par l'insertion du circuit imprimé principal (20) comportant le microcontrôleur (1) dans une cage de connexion permettant de détecter toute tentative d'ouverture de la cage ou de perçage à travers la cage.

Dans certains modes de réalisation, le circuit imprimé de sécurité en amont (21) comprend au moins un capteur de proximité (16k) pour détecter toute présence ou action et envoyer un signal au microcontrôleur (1) pour effectuer une analyse et déclencher une action (affichage d'un message de bienvenue ou d'utilisation).

Dans certains modes de réalisation, le circuit imprimé de connexion (22) comprend au moins une interface USB (16a), un port série UART (16i), une interface Ethernet (16j) et une interface Bluetooth (16c)/Wifi (16b) pour la communication et l'échange de données.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Microcontrôleur (1) comprenant un processeur (11) comprenant une mémoire séparée en au moins deux zones, qui sont sécurisée (110), non sécurisée (111) ou partagée, pour mettre en œuvre un démarrage sécurisé, un circuit de commande d'autoprotection (13) comportant au moins un capteur (130a, 130b, 130c) pour détecter les conditions de vulnérabilité, ledit processeur (11) exécutant un système d'exploitation Linux, Linux OS, et comprenant également un moniteur pour commuter les opérations soit dans une zone sécurisée (110) de la mémoire pour faire fonctionner au moins des processus d'authentification soit dans une zone non sécurisée (111) pour d'autres opérations et déterminer si les périphériques connectés ou accédant au, ou accédés par le microcontrôleur (1) doivent être gérés par la zone sécurisée (110) ou par la zone non sécurisée (111), ledit microcontrôleur (1) étant **caractérisé en ce qu'**il comprend un pare-feu matériel (12), utilisé par ledit processeur (11), pour déterminer si l'information ou la commande d'une application est autorisée à accéder à la zone sécurisée (110) ou non, ledit processeur (11), le pare-feu matériel (12) et ledit circuit de commande d'autoprotection (13) étant agencés de manière à ce que ledit processeur soit uniquement relié au pare-feu matériel et ledit pare-feu matériel (12) soit relié audit circuit de commande d'autoprotection (13) pour éviter toute intrusion et/ou récupération de données en cas de défaillance dudit circuit de commande d'autoprotection (13).

2. Microcontrôleur selon la revendication 1, dans lequel les zones sécurisée (110) et non sécurisée (111) sont toutes deux incluses dans le processeur (11) du microcontrôleur (1), les procédés de traitement et d'échange de données exécutés par le microcontrôleur (1) s'effectuant d'une zone à l'autre en fonction de la nature des informations à traiter.

3. Microcontrôleur selon les revendications 1 et 2, dans lequel le pare-feu matériel (12) comporte des registres qui sont affectés chacun à un périphérique (16a,16b, 16c, 16d, 16e, 16f) et qui utilisent les informations mémorisées dans l'arborescence des périphériques Linux, décrit dans le système d'exploitation Linux, dans lequel ladite arborescence des périphériques est ajoutée avec des attributs de sécurité, définissant le statut sécurisé (S) ou non sécurisé (N) de périphérique à mémoriser dans chaque registre associé à un périphérique un statut sécurisé ou non sécurisé pour induire le traitement de l'information ou de la commande à partir d'un périphérique dans la zone sécurisée du processeur si le périphérique est défini comme sécurisé, et induire le traitement de l'information ou de la commande à partir d'un périphérique dans la zone non sécurisée du processeur si le périphérique est défini comme non sécurisé.

4. Microcontrôleur (1) selon les revendications 1 à 3, dans lequel l'arborescence des périphériques Linux est authentifiée par une application primaire sécurisée durant l'opération de démarrage sécurisé.

5. Microcontrôleur (1) selon les revendications 1 à 4, dans lequel la zone sécurisée (110) comprend un cœur (110b) recevant au moins une instruction de la zone non sécurisée (111) ou d'un périphérique (16a,16b, 16c, 16d, 16e, 16f) inclus dans l'arborescence des périphériques, et exécutant différentes opérations qui dépendent de l'instruction reçue, un registre (110a) comprenant un ensemble de services sécurisés comportant les règles pour la protection de différents types des processus correspondant à différents types de services.

6. Microcontrôleur (1) selon les revendications 1 à 4, dans lequel la zone non sécurisée (111) comprend le noyau du système d'exploitation (111a), un environnement d'exécution (111b) des programmes et applications et/ou des procédés de traitement des données, au moins une bibliothèque, et au moins une plateforme (111c, 111d) dédiée à l'ajout d'applications clientes (111d) ou d'applications propriétaires (111c), le procédé d'ajout et l'accès desdites applications aux fonctionnalités du dispositif contrôlé par le microcontrôleur (1) étant définis par des règles de sécurité mises en œuvre par le pare-feu matériel (12).

7. Microcontrôleur selon la revendication précédente, dans lequel l'environnement d'exécution (111b) est configuré pour intégrer au moins un moyen pour interpréter différents types d'applications clientes, ledit moyen étant capable de traduire le langage desdites applications en programmes natifs afin de les traiter sur ledit environnement d'exécution (111b).

8. Microcontrôleur (1) selon les revendications 6 et 7, dans lequel l'environnement d'exécution est Android.

9. Microcontrôleur (1) selon la revendication 1 à 3, dans lequel les périphériques inclus dans l'arborescence des périphériques et accessibles sont au moins deux des périphériques suivants: circuit Bluetooth (16c)/Wifi (16b), Ethernet (16j), imprimantes, affichage, GPS, caméra (16l), son, capteur de proximité (16k), HDMI, USB (16a), écran tactile (16f), clavier, lecteur sans contact (16e), lecteur de cartes magnétiques (16h), lecteur de carte à puce (16g), matériel cryptographique, gestionnaire de clés informatique.

10. Microcontrôleur selon la revendication précédente, dans lequel les périphériques affichage, écran tactile (16f), clavier, lecteur sans contact (16e), lecteur de cartes magnétiques (16h), lecteur de carte à puce (16g), matériel cryptographique et gestionnaire de clés informatique sont des périphériques sécurisés, tandis que les périphériques circuit Bluetooth (16c)/Wifi (16b), Ethernet (16j), imprimantes, GPS, caméra (16l), son, capteur de proximité (16k), HDMI et USB (16a) reçoivent soit un statut sécurisé (S) soit un statut non sécurisé (N).

11. Processus de démarrage sécurisé du système d'exploitation Linux pour un microcontrôleur (1) avec dispositif d'autoprotection (13) et zone sécurisée(110) selon la revendication 1, comprenant les étapes de:
• commencer à exécuter le code contenu dans la mémoire ROM (10a);
• charger une partition initiale cryptée à partir d'une mémoire externe;
• décrypter l'information de la partition initiale;
• authentifier des clés publiques (Pk) et authentifier une application primaire protégée (PPA) et un logiciel initial (ISW);
• et charger et démarrer les autres programmes de démarrage de Linux.
le processus de démarrage étant **caractérisé en ce que** l'étape « charger et démarrer les autres programmes de démarrage de Linux» comprend au moins une des étapes consistant à :
- charger le U-boot SPL (Secondary Program Loader);
- authentifier l'arborescence des périphériques (DT);
- démarrer le PA-loader (Primary Application loader);
- décrypter le PA live (Primary Application live);
- initialiser ramdisk;
- charger le noyau Linux;
- démarrer le noyau Linux;
- démarrer dm-verity;
- exécuter des applications Android sous SELinux

12. Processus de démarrage sécurisé du système d'exploitation Linux pour un microcontrôleur (1) selon la revendication 11, **caractérisé en ce qu'**au moins plusieurs registres de périphériques du microcontrôleur (1) ont initialement un statut sécurisé (S) quand le code contenu dans la ROM (10a) commence à s'exécuter et avant l'activation du PA-loader.

13. Processus de démarrage sécurisé du système d'exploitation Linux pour un microcontrôleur (1) selon la revendication 12, **caractérisé en ce qu'**après l'activation du PA-loader, les attributs de sécurité définis pour chaque périphérique dans l'arborescence de périphériques sont gérés par le PA-Loader et le statut sécurisé (S) d'au moins un registre du pare-feu (12) associé à un périphérique, initialement défini dans un statut sécurisé (S) et jugé non critique en raison de la description dans l'arborescence des périphériques pour la sécurité et/ou l'intégrité d'un système ou d'un dispositif, est modifié en un statut non sécurisé (N) ou normal dans le registre du pare-feu.

14. Processus de démarrage sécurisé du système d'exploitation Linux pour un microcontrôleur (1) selon les revendications 11 à 13, **caractérisé en ce que** les plateformes d'applications (111 c, 111d) sont séparées de la bibliothèque, du noyau (111a) du système d'exploitation et de l'environnement d'exécution (111b) du système d'exploitation par un module de contrôle, contenu dans le système d'exploitation, qui contrôle les accès pour les applications et limite l'accès à un périphérique donné ou à un service pour les applications clientes non autorisées, le contrôle à l'accès dudit périphérique ou dudit service étant effectué au moyen d'un fichier fourni par SELinux, ledit fichier décrivant dans une liste blanche ou « whitelist » le type d'opérations permises en combinaison avec l'identité (ID) d'une application particulière ou d'un processus et établissant la permission d'opération pour chaque application.

15. Processus de démarrage sécurisé du système d'exploitation Linux pour un microcontrôleur (1) selon les revendications 11 à 14, **caractérisé en ce que** l'accès d'une application cliente autorisée ou non autorisée à certaines fonctionnalités d'un périphérique tel que par exemple l'écran d'affichage tactile, est contrôlé par le microcontrôleur (1) et se fait au moyen d'un proxy sécurisé actionné par le module de contrôle, ledit proxy sécurisé vérifiant si un message concernant un évènement tactile est signé par un tiers de confiance avant d'être affiché et si non, l'événement tactile n'est pas transféré dans la zone non sécurisée.

16. Utilisation d'un microcontrôleur (1) avec un dispositif d'autoprotection (13) et zone sécurisée (110), selon la revendication 1, et démarrage sécurisé du système d'exploitation Linux dans un terminal (2) tout-en-un comprenant un écran LCD (16f), un écran tactile capacitif (16f), un lecteur de carte magnétique (16h), un lecteur de carte à puce (16g), un lecteur de carte sans contact (16e), un circuit imprimé de sécurité en amont (21), un circuit imprimé de connexion (22) et une caméra (16l) pour constituer un terminal (2) inviolable dans lequel chaque opération sécurisée ou périphérique sécurisé est géré(e) par la zone sécurisée (110) du microcontrôleur (1) et dans lequel la protection de l'accès à une cette zone sécurisée (110) est protégé contre l'accès d'une sonde au microcontrôleur (1) par l'insertion du circuit imprimé principal (20) comportant le microcontrôleur (1) dans une cage de connexion permettant de détecter toute tentative d'ouverture de la cage ou de perçage à travers la cage.

17. Utilisation d'un microcontrôleur (1) selon la revendication précédente, **caractérisé en ce que** le circuit imprimé de sécurité en amont (21) comprend au moins un capteur de proximité (16k) pour détecter toute présence ou action et envoyer un signal au microcontrôleur (1) pour effectuer une analyse et déclencher une action: affichage d'un message de bienvenue ou d'utilisation.

18. Utilisation d'un microcontrôleur (1) selon la revendication 17, **caractérisé en ce que** le circuit imprimé de connexion (22) comprend au moins une interface USB (16a), un port série UART (16i), une interface Ethernet (16j) et une interface Bluetooth (16c)/Wifi (16b) pour la communication et l'échange de données.

## Patentansprüche

1. Mikrocontroller (1) mit einem Prozessor (11), der einen Speicher aufweist, der in mindestens zwei Bereiche unterteilt ist, die sicher (110) oder unsicher (111) sind oder gemeinsam genutzt werden, um ein sicheres Booten zu implementieren, und mit einer Manipulationskontrollschaltung (13), die mindestens einen Sensor (130a, 130b, 130c) zum Erfassen von Verwundbarkeitsbedingungen aufweist, wobei der Prozessor (11), auf dem ein Linux-Betriebssystem (Linux OS) läuft, auch einen Monitor umfasst, um Operationen entweder auf einen sicheren Bereich (110) des Speichers zum Ausführen von zumindest Authentifizierungsprozessen oder auf einen unsicheren Bereich (111) für andere Operationen zu schalten und festzustellen, ob die Peripheriegeräte, die angeschlossen sind oder zugreifen oder auf die der Mikrocontroller (1) zugreift, vom sicheren Bereich (110) oder vom unsicheren Bereich (111) zu verwalten sind, wobei der Mikrocontroller (1) **dadurch gekennzeichnet ist, dass** er eine Hardware-Firewall (12) umfasst, die vom Prozessor (11) verwendet wird, um festzustellen, ob die Information oder Steuerung einer Anwendung auf den sicheren Bereich (110) zugreifen darf oder nicht, wobei der Prozessor (11), die Hardware-Firewall (12) und die Manipulationskontrollschaltung (13) so ausgelegt sind, dass der Prozessor nur mit der Hardware-Firewall verbunden ist und die Hardware-Firewall (12) mit der Manipulationskontrollschaltung (13) verbunden ist, um Eindringen und/oder Datenwiederherstellung bei Ausfall der Manipulationskontrollschaltung (13) zu verhindern.

2. Mikrocontroller nach Anspruch 1, wobei sowohl der sichere (110) als auch der unsichere (111) Bereich im Prozessor (11) des Mikrocontrollers (1) enthalten sind, wobei die vom Mikrocontroller (1) durchgeführten Datenverarbeitungs- und -austauschverfahren von einem Bereich zum anderen in Abhängigkeit von der Art der zu verarbeitenden Informationen durchgeführt werden.

3. Mikrocontroller nach den Ansprüchen 1 und 2, wobei die Hardware-Firewall (12) Register aufweist, die jeweils einem Peripheriegerät (16a, 16b, 16c, 16d, 16e, 16f) zugeordnet sind und die die im Linux-Betriebssystem beschriebenen, im Linux-Gerätebaum gespeicherten Informationen nutzen, wobei der Gerätebaum mit Sicherheitsattributen versehen ist, die den sicheren (S) oder unsicheren (N) Peripheriegerätestatus definieren, der in jedem mit einem Peripheriegerät assoziierten Register als sicherer oder unsicherer Status gespeichert werden soll, um die Verarbeitung der Informationen oder die Steuerung von einem Peripheriegerät im sicheren Bereich des Prozessors zu veranlassen, wenn das Peripheriegerät als sicher definiert ist, und um die Verarbeitung der Informationen oder die Steuerung von einem Prozessor im unsicheren Bereich des Prozessors zu veranlassen, wenn das Peripheriegerät als unsicher definiert ist.

4. Mikrocontroller (1) nach den Ansprüchen 1 bis 3, wobei der Linux-Gerätebaum während des sicheren Bootens von einer sicheren primären Anwendung authentifiziert wird.

5. Mikrocontroller (1) nach den Ansprüchen 1 bis 4, wobei der sichere Bereich (110) einen Kern (110b) umfasst, der mindestens einen Befehl aus dem unsicheren Bereich (111) oder von einem im Gerätebaum enthaltenen Peripheriegerät (16a, 16b, 16c, 16d, 16e, 16f) empfängt und verschiedene Operationen in Abhängigkeit von dem empfangenen Befehl ausführt, wobei ein Register (110a) einen Satz von sicheren Diensten umfasst, der Regeln für den Schutz verschiedener Prozesstypen entsprechend verschiedenen Arten von Diensten enthält.

6. Mikrocontroller (1) nach den Ansprüchen 1 bis 4, wobei der unsichere Bereich (111) den Betriebssystemkernel (111a), eine Ausführungsumgebung (111b) von Programmen und Anwendungen und/oder Datenverarbeitungsvorgängen, mindestens eine Bibliothek und mindestens eine Plattform (111c, 111d) umfasst, die zum Hinzufügen von Client-Anwendungen (111d) oder proprietären Anwendungen (111c) dediziert sind, wobei der Hinzufügungsprozess und der Zugriff der Anwendungen auf die Funktionalitäten des vom Mikrocontroller (1) gesteuerten Geräts durch Sicherheitsregeln definiert sind, die von der Hardware-Firewall (12) implementiert werden.

7. Mikrocontroller nach dem vorherigen Anspruch, wobei die Ausführungsumgebung (111b) zum Integrieren mindestens eines Mittels zum Interpretieren verschiedener Typen von Client-Anwendungen konfiguriert ist, wobei das Mittel die Sprache der Anwendungen in native Programme zur Verarbeitung auf der Ausführungsumgebung (111b) übersetzen kann.

8. Mikrocontroller (1) nach den Ansprüchen 6 und 7, wobei die Ausführungsumgebung Android ist.

9. Mikrocontroller (1) nach den Ansprüchen 1 bis 3, wobei die im Gerätebaum enthaltenen und zugänglichen Peripheriegeräte mindestens zwei der folgenden Peripheriegeräte sind: Bluetooth (16c)/Wifi (16b), Ethernet (16j), Drucker, Display, GPS, Kamera (16l), Ton, Näherungssensor (16k), HDMI, USB (16a), Touchscreen (16f), Tastatur, kontaktloser Leser (16e), Magnetkartenleser (16h), Chipkartenleser (16g), Kryptografie-Hardware, Computer-Schlüsselmanager.

10. Mikrocontroller nach dem vorherigen Anspruch, wobei die Peripheriegeräte Display, Touchscreen (16f), Tastatur, kontaktloser Leser (16e), Magnetkartenleser (16h), Chipkartenleser (16g), Kryptographie-Hardware und Computer-Schlüsselmanager sichere Peripheriegeräte sind, während die Peripheriegeräte Bluetooth (16c)/Wifi (16b), Ethernet (16j), Drucker, GPS, Kamera (16l), Ton,
Näherungssensor (16k), HDMI und USB (16a) entweder einen sicheren (S) oder einen unsicheren (N) Status erhalten.

11. Verfahren zum sicheren Booten des Linux-Betriebssystems für einen Mikrocontroller (1) mit Manipulationsschutz (13) und sicherem Bereich (110) nach Anspruch 1, das die folgenden Schritte beinhaltet:
• Beginnen der Ausführung des im ROM-Speicher enthaltenen Code (10a);
• Laden einer verschlüsselten Anfangspartition aus einem externen Speicher;
• Entschlüsseln der Informationen der Anfangspartition;
• Authentifizieren der öffentlichen Schlüssel (Pk) und Authentifizieren einer geschützten primären Anwendung (PPA) und einer Original-Software (ISW); und
• Laden und Starten der anderen Linux-Boot-Programme;
wobei der Bootvorgang **dadurch gekennzeichnet ist, dass** der Schritt "Laden und Starten anderer Linux-Boot-Programme" mindestens einen der folgenden Schritte beinhaltet:
- Laden des U-Boot-SPL (Secondary Program Loader);
- Authentifizieren des Gerätebaums (DT);
- Starten des PA-Loaders (Primary Application loader);
- Entschlüsseln von PA live (Primary Application live);
- Initialisieren der RAM-Disk;
- Laden des Linux-Kernels;
- Booten des Linux-Kernels;
- Booten von dm-verity;
- Ausführen von Android-Anwendungen unter SELinux.

12. Sicheres Boot-Verfahren des Linux-Betriebssystems für einen Mikrocontroller (1) nach Anspruch 11, **dadurch gekennzeichnet, dass** mindestens mehrere Peripherieregister des Mikrocontrollers (1) bei Beginn der Ausführung des im ROM (10a) enthaltenen Code und vorder Aktivierung des PA-Loaders zunächst einen sicheren Status (S) haben.

13. Sicheres Bootverfahren des Linux-Betriebssystems für einen Mikrocontroller (1) nach Anspruch 12, **dadurch gekennzeichnet, dass** nach der Aktivierung des PA-Loaders die für jedes Peripheriegerät im Gerätebaum definierten Sicherheitsattribute vom PA-Loader verwaltet werden und der sichere Status (S) mindestens eines Registers der mit einem Peripheriegerät assoziierten Firewall (12), anfänglich in einem sicheren Status (S) definiert und aufgrund der Beschreibung im Gerätebaum für die Sicherheit und/oder Integrität eines Systems oder Geräts als unkritisch eingestuft, im Register der Firewall auf einen unsicheren (N) oder normalen Status geändert wird.

14. Verfahren zum sicheren Booten des Linux-Betriebssystems für einen Mikrocontroller (1) nach den Ansprüchen 11 bis 13, **dadurch gekennzeichnet, dass** die Anwendungsplattformen (111c, 111d) von der Bibliothek, dem Kernel (111a) des Betriebssystems und der Ausführungsumgebung (111b) des Betriebssystems durch ein im Betriebssystem enthaltenes Kontrollmodul getrennt sind, das den Zugriff für die Anwendungen kontrolliert und den Zugriff auf ein gegebenes Peripheriegerät oder einen Dienst für nicht autorisierte Client-Anwendungen begrenzt, wobei die Kontrolle des Zugriffs auf das Peripheriegerät oder den Dienst mittels einer von SELinux bereitgestellten Datei erfolgt, wobei die Datei in einer Whitelist die Art der zulässigen Operationen in Kombination mit der Identität (ID) einer bestimmten Anwendung oder eines Prozesses beschreibt und die Operationserlaubnis für jede Anwendung festlegt.

15. Sicheres Boot-Verfahren des Linux-Betriebssystems für einen Mikrocontroller (1) nach den Ansprüchen 11 bis 14, **dadurch gekennzeichnet, dass** der Zugriff einer autorisierten oder nicht autorisierten Client-Anwendung auf bestimmte Funktionalitäten eines Peripheriegeräts, wie z.B. den Touchscreen, vom Mikrocontroller (1) gesteuert wird und mittels eines vom Steuermodul betriebenen sicheren Proxy erfolgt, wobei der sichere Proxy prüft, ob eine ein taktiles Ereignis betreffende Nachricht von einer vertrauenswürdigen Drittpartei signiert ist, bevor sie angezeigt wird, und wenn nicht, das taktile Ereignis nicht in den unsicheren Bereich übertragen wird.

16. Verwendung eines Mikrocontrollers (1) mit Selbstschutzvorrichtung (13) und sicherem Bereich (110) nach Anspruch 1, und sicheres Booten des Linux-Betriebssystems in einem All-in-one-Terminal (2) mit einem LCD-Bildschirm (16f), einem kapazitiven Touchscreen (16f), einem Magnetkartenleser (16h), einem Chipkartenleser (16g), einem kontaktlosen Kartenleser (16e), einer vorgeschalteten gedruckten Sicherheitsschaltung (21), einer gedruckten Verbindungsschaltung (22) und einer Kamera (161) für ein manipulationssicheres Terminal (2), in dem jede(s) sichere Operation oder Peripheriegerät durch den sicheren Bereich (110) des Mikrocontrollers (1) verwaltet wird und in dem der Schutz des Zugangs zu diesem sicheren Bereich (110) vor dem Zugriff einer Sonde auf den Mikrocontroller (1) durch Einsetzen der Hauptplatine (20), die den Mikrocontroller (1) in einem Verbindungskäfig umfasst, geschützt ist, um jeden Käfigöffnungs- oder -durchbrechungsversuch zu erkennen.

17. Verwendung eines Mikrocontrollers (1) nach dem vorherigen Anspruch, **dadurch gekennzeichnet, dass** die vorgeschaltete gedruckte Sicherheitsschaltung (21) mindestens einen Näherungssensor (16k) zum Erfassen jeder Anwesenheit oder Aktion und zum Senden eines Signals an den Mikrocontroller (1) umfasst, um eine Analyse durchzuführen und eine Aktion auszulösen: Anzeigen einer Begrüßungs- oder Benutzungsmeldung.

18. Verwendung eines Mikrocontrollers (1) nach Anspruch 17, **dadurch gekennzeichnet, dass** die gedruckte Verbindungsschaltung (22) mindestens eine USB-Schnittstelle (16a), einen seriellen UART-Port (16i), eine Ethernet-Schnittstelle (16j) und eine Bluetooth (16c)/Wifi (16b)-Schnittstelle für Kommunikation und Datenaustausch umfasst.

## Claims

1. Microcontroller (1) comprising a processor (11) comprising a memory divided into at least two zones, which are secure (110), non-secure (111) or shared, for carrying out secure startup, an autoprotection control circuit (13) comprising at least one sensor (130a, 130b, 130c) for detecting conditions of vulnerability, said processor (11) executing a Linux operating system (Linux OS) and also comprising a monitor for switching operations either to a secure zone (110) of the memory in order to cause functioning of at least authentication processes, or to a non-secure zone (111) for other operations, and determining whether the peripherals connected to or accessing the microcontroller (1) or being accessed thereby are to be managed by the secure zone (110) or by the non-secure zone (111), said microcontroller (1) being **characterised in that** it comprises a hardware firewall (12), used by said processor (11), for determining whether the information or the control of an application is authorised to access the secure zone (110) or not, said processor (11), the hardware firewall (12) and said autoprotection control circuit (13) being arranged in such a way that said processor is only connected to the hardware firewall and said hardware firewall (12) is connected to said autoprotection control circuit (13) in order to avoid any intrusion and/or data retrieval in case of failure of said autoprotection control circuit (13).

2. Microcontroller according to claim 1, in which the secure (110) and non-secure (111) zones are both included in the processor (11) of the microcontroller (1), the processes of data processing and exchange executed by the microcontroller (1) being carried out from one zone to the other as a function of the nature of the information to be processed.

3. Microcontroller according to claims 1 and 2, in which the hardware firewall (12) comprises registers which are each allocated to a peripheral (16a, 16b, 16c, 16d, 16e, 16f) and which use the information stored in the Linux hierarchy of peripherals, described in the Linux operating system, in which security attributes are added to said hierarchy of peripherals, defining the secure (S) or non-secure (N) state of a peripheral to be stored in each register associated with a peripheral for eliciting processing of the information or of the control from a peripheral in the secure zone of the processor if the peripheral is defined as secure, and eliciting processing of the information or of the control from a peripheral in the non-secure zone of the processor if the peripheral is defined as non-secure.

4. Microcontroller (1) according to claims 1 to 3, in which the Linux hierarchy of peripherals is authenticated by a secure primary application during the secure startup operation.

5. Microcontroller (1) according to claims 1 to 4, in which the secure zone (110) comprises a core (110b) receiving at least one instruction from the non-secure zone (111) or from a peripheral (16a, 16b, 16c, 16d, 16e, 16f) included in the hierarchy of peripherals, and executing different operations which depend on the instruction received, a register (110a) including a set of secure services comprising the rules for the protection of different types of processes corresponding to different types of services.

6. Microcontroller (1) according to claims 1 to 4, in which the non-secure zone (111) comprises the kernel of the operating system (111a), an environment of execution (111b) of the programs and applications and/or of the processes of data processing, at least one library, and at least one platform (111c, 111d) dedicated to the addition of client applications (111d) or owner applications (111c), the process of addition and access of said applications to the functionalities of the device controlled by the microcontroller (1) being defined by security rules implemented by the hardware firewall (12).

7. Microcontroller according to the preceding claim, in which the execution environment (111b) is configured to integrate at least one means for interpreting different types of client applications, said means being capable of translating the language of said applications into native programs in order to process them on said execution environment (111b).

8. Microcontroller (1) according to claims 6 and 7, in which the execution environment is Android.

9. Microcontroller (1) according to claims 1 to 3, in which the peripherals that are included in the hierarchy of peripherals and accessible are at least two of the following peripherals: Bluetooth (16c)/WiFi (16b) circuit, Ethernet (16j), printers, display, GPS, camera (161), sound, proximity sensor (16k), HDMI, USB (16a), touchscreen (16f), keyboard, contactless reader (16e), magnetic card reader (16h), chip card reader (16g), cryptographic hardware, data processing key manager.

10. Microcontroller according to the preceding claim, in which the display, touchscreen (16f), keyboard, contactless reader (16e), magnetic card reader (16h), chip card reader (16g), cryptographic hardware and data processing key manager peripherals are secure peripherals, while the Bluetooth (16c)/WiFi (16b) circuit, Ethernet (16j), printers, GPS, camera (16l), sound, proximity sensor (16k), HDMI and USB (16a) peripherals are given either a secure state (S) or a non-secure state (N).

11. Process for secure startup of the Linux operating system for a microcontroller (1) with autoprotection device (13) and secure zone (110) according to claim 1, comprising the steps of:
• commencing execution of the code contained in the ROM memory (10a);
• loading an encrypted initial partition from an external memory;
• decrypting the information of the initial partition;
• authenticating public keys (Pk) and authenticating a protected primary application (PPA) and initial software (ISW);
• and loading and starting up the other Linux startup programs,
the startup process being **characterised in that** the step of "loading and starting up the other Linux startup programs" comprises at least one of the steps consisting of:
- loading the SPL U-boot (secondary program loader);
- authenticating the hierarchy of peripherals (DT);
- starting up the PA loader (primary application loader);
- decrypting the PA live (primary application live);
- initialising ramdisk;
- loading the Linux kernel;
- starting up the Linux kernel;
- starting up dm-verity;
- executing Android applications and SELinux.

12. Process for secure startup of the Linux operating system for a microcontroller (1) according to claim 11, **characterised in that** at least a plurality of registers of peripherals of the microcontroller (1) initially have a secure state (S) when the code contained in the ROM (10a) commences running and before activation of the PA loader.

13. Process for secure startup of the Linux operating system for a microcontroller (1) according to claim 12, **characterised in that** after activation of the PA loader, the security attributes defined for each peripheral in the hierarchy of peripherals are managed by the PA loader and the secure state (S) of at least one register of the firewall (12) associated with a peripheral, initially defined in a secure state (S) and deemed non-critical by reason of the description in the hierarchy of peripherals for the security and/or integrity of a system or device, is modified to a non-secure state (N) or normal state in the register of the firewall.

14. Process for secure startup of the Linux operating system for a microcontroller (1) according to claims 11 to 13, **characterised in that** the applications platforms (111c, 111d) are separated from the library, from the kernel (111a) of the operating system and from the execution environment (111b) of the operating system by a control module, contained in the operating system, which controls access for the applications and limits access to a given peripheral or to a service for unauthorised client applications, control of access of said peripheral or of said service being carried out by means of a file provided by SELinux, said file describing in a white list the type of operations permitted in combination with the identity (ID) of a particular application or of a process and establishing permission to operate for each application.

15. Process for secure startup of the Linux operating system for a microcontroller (1) according to claims 11 to 14, **characterised in that** access by an authorised or unauthorised client application to certain functionalities of a peripheral such as the touchscreen is controlled by the microcontroller (1) and takes place by means of a secure proxy actuated by the control module, said secure proxy verifying whether a message concerning a touch event is signed by a trusted third party before being displayed, and if not, the touch event is not transferred to the non-secure zone.

16. Use of a microcontroller (1) with an autoprotection device (13) and secure zone (110), according to claim 1, and secure startup of the Linux operating system in an all-in-one terminal (2) comprising an LCD screen (16f), a capacitive touchscreen (16f), a magnetic card reader (16h), a chip card reader (16g), a contactless card reader (16e), a printed circuit for upstream security (21), a printed circuit for connection (22) and a camera (161) for constituting an inviolable terminal (2) in which each secure operation or secure peripheral is managed by the secure zone (110) of the microcontroller (1) and in which protection of access to this secure zone (110) is protected against access by a probe to the microcontroller (1) by insertion of the main printed circuit (20) comprising the microcontroller (1) in a connection box permitting the detection of any attempt to open the box or to penetrate the box.

17. Use of a microcontroller (1) according to the preceding claim, **characterised in that** the printed circuit for upstream security (21) comprises at least one proximity sensor (16k) for detecting any presence or action and sending a signal to the microcontroller (1) to carry out an analysis and trigger an action: display of a welcome or operating message.

18. Use of a microcontroller (1) according to claim 17, **characterised in that** the printed circuit (22) for connection comprises at least one USB interface (16a), a UART serial port (16i), an Ethernet interface (16j) and a Bluetooth (16c)/WiFi (16b) interface for the communication and exchange of data.
